# DEMANDE DE BREVET EUROPEEN

(11) **EP 2 335 879 A1**
(43) Date de publication de la demande: **22.06.2011**
(21) Numéro de dépôt: 10193435.4
(22) Date de dépôt: 02.12.2010
(51) Int. Cl.: B25B 5/06, B25B 27/00, B60S 1/04

(54) **Pince de démontage d'un bras d'essuie-vitre et procédé de démontage associé**

(30) Priorité: 21.12.2009 FR 0959264
(71) Demandeur: Peugeot Citroën Automobiles SA, 78140 Vélizy-Villacoublay (FR)
(72) Inventeur: Abreu, Xavier, 78310 MAUREPAS (FR)

(57) **Abrégé**

Pince (1) de démontage d'un bras d'essuie-vitre (2) qui comporte une tête d'entraînement (20) couplée en rotation avec un arbre d'entraînement et serrée sur ce dernier au moyen d'un écrou (22).

La pince comporte deux mâchoires (4) de serrage mobiles en rotation entre une position ouverte et une position fermée, les mâchoires étant pourvues respectivement de mors supérieurs (43) de serrage adaptés pour venir en appui contre une face annulaire supérieure d'une collerette (25) de l'écrou, et de mors inférieurs (44) de serrage adaptés pour venir en appui contre une face inférieure (27) de la tête d'entraînement (20) opposée à l'écrou.

En cours de démontage, la pince enserre la collerette de l'écrou et la tête d'entraînement entre ses mors inférieurs et supérieurs pour que le dévissage de l'écrou provoque le retrait à la fois de l'écrou et de la tête d'entraînement hors de l'arbre d'entraînement.

La présente invention trouve une application dans le domaine automobile.

## Description

La présente invention se rapporte à une pince de démontage d'un bras d'essuie-vitre, et à un procédé de démontage d'un bras d'essuie-vitre.

De manière classique, dans un véhicule automobile, un bras d'essuie-vitre comporte :
- une tête d'entraînement pourvue d'un orifice dans lequel est engagé un arbre d'entraînement couplé en rotation à ladite tête d'entraînement, de sorte que la rotation de l'arbre d'entraînement provoque la rotation de la tête d'entraînement et du bras d'essuie-vitre en général ; et
- un écrou de serrage axial de la tête d'entraînement sur l'arbre d'entraînement, cet écrou coopérant avec une extrémité libre filetée de l'arbre d'entraînement en saillie par rapport à une face supérieure de la tête d'entraînement, et cet écrou étant pourvu d'une tête d'écrou et d'une collerette présentant une face annulaire inférieure venant en appui sur ladite face supérieure de la tête d'entraînement après serrage de l'écrou.

Pour démonter le bras d'essuie-vitre, autrement dit pour extraire ou retirer le bras d'essuie-vitre hors de l'arbre d'entraînement, il est connu de :
- dans un premier temps, dévisser l'écrou de l'extrémité libre filetée de l'arbre d'entraînement afin de retirer cet écrou hors de l'arbre d'entraînement ; puis
- dans un second temps, retirer la tête d'entraînement, et donc le bras d'essuie-vitre, hors de l'arbre d'entraînement.

Il est d'usage de retirer la tête d'entraînement, et donc le bras d'essuie-vitre, hors de l'arbre d'entraînement de façon manuelle ou en employant un outil adéquat, tel qu'un extracteur à griffes.

Ce type de procédé présente l'inconvénient de requérir plusieurs opérations, voire plusieurs outils, prenant du temps pour un unique résultat, à savoir le démontage du bras d'essuie-vitre.

La présente invention a notamment pour but de simplifier et de rendre rapide le démontage d'un bras d'essuie-vitre en proposant un outil simple et efficace, ainsi qu'un procédé de démontage utilisant un tel outil.

A cet effet, elle propose une pince de démontage d'un bras d'essuie-vitre, ledit bras d'essuie-vitre comportant une tête d'entraînement pourvue d'un orifice dans lequel est engagé un arbre d'entraînement couplé en rotation à ladite tête d'entraînement, et un écrou de serrage coopérant avec une extrémité libre filetée dudit arbre d'entraînement en saillie par rapport à une face supérieure de la tête d'entraînement, ledit écrou étant pourvu d'une tête d'écrou et d'une collerette présentant une face annulaire inférieure venant en appui sur ladite face supérieure de la tête d'entraînement après serrage de l'écrou sur l'arbre d'entraînement, ladite pince comportant deux mâchoires de serrage mobiles en rotation entre une position ouverte et une position fermée, lesdites mâchoires étant pourvues respectivement de :
- mors supérieurs de serrage adaptés pour, en cours de démontage, venir en appui contre une face annulaire supérieure de la collerette de l'écrou opposée à la face annulaire inférieure ; et de
- mors inférieurs de serrage situés en-dessous des mors supérieurs de serrage à une distance prédéterminée et adaptés pour, en cours de démontage, venir en appui contre une face inférieure de la tête d'entraînement opposée à la face supérieure, de sorte que, en cours de démontage, la pince enserre la collerette de l'écrou et la tête d'entraînement entre ses mors inférieurs et supérieurs pour que le dévissage de l'écrou provoque le retrait à la fois de l'écrou et de la tête d'entraînement hors de l'arbre d'entraînement.

Ainsi, avec cette pince, il ne reste plus qu'à dévisser l'écrou qui entame alors un mouvement de translation, l'effort de translation de l'écrou et donc de la collerette est transmis à la pince, via les mors supérieurs de serrage, et à la tête d'entraînement, via les mors inférieurs de serrage, de sorte que la tête d'entraînement suive l'écrou dans son mouvement de translation et soit extraite hors de l'arbre d'entraînement en même temps que l'écrou.

Ainsi, le fait de dévisser l'écrou extrait en même temps la tête d'entraînement hors de l'arbre d'entraînement, de sorte que le démontage se fait en une seule opération tout en gagnant du temps.

Selon une possibilité de l'invention, les mors supérieurs présentent une forme incurvée, notamment en arc de cercle, pour contourner la tête d'écrou et ne pas gêner le dévissage de l'écrou en cours de démontage. Avec cette forme incurvée, les mors supérieurs viennent uniquement en appui contre la collerette tout en contournant la tête d'écrou, par exemple une tête d'écrou hexagonale, destinée à coopérer avec un outil de vissage/dévissage.

Selon une autre possibilité de l'invention, les mors inférieurs présentent une forme incurvée, notamment en arc de cercle, pour permettre le contournement d'une couronne de couplage en saillie par rapport à la face inférieure de la tête d'entraînement et pourvue intérieurement de crans en relief de manière à coupler en rotation l'arbre d'entraînement et la tête d'entraînement. Avec cette forme incurvée, les mors inférieurs viennent uniquement en appui contre la face inférieure de la tête d'entraînement tout en contournant la couronne de couplage.

De façon avantageuse, la pince comporte en outre une pièce centrale sur laquelle les deux mâchoires sont montées mobiles en rotation, ladite pièce centrale étant pourvue de :
- une paroi supérieure conçue pour, en cours de démontage, venir en appui contre la face annulaire supérieure de la collerette de l'écrou ; et
- une paroi inférieure conçue pour, en cours de démontage, venir en appui contre la face inférieure de la tête d'entraînement.

De cette manière, la pince enserre la collerette de l'écrou et la tête d'entraînement entre ses mors inférieurs et supérieurs, et également entre les parois inférieure et supérieure de la pièce centrale, optimisant ainsi la liaison mécanique entre écrou et tête d'entraînement.

Selon une caractéristique, la paroi inférieure est pourvue d'une encoche, notamment en arc de cercle, pour permettre le contournement de la couronne de couplage.

Selon une autre caractéristique, la paroi supérieure est pourvue d'une encoche, notamment en arc de cercle, pour contourner la tête d'écrou et ne pas gêner le dévissage de l'écrou en cours de démontage.

Dans un mode de réalisation particulier, la pince comprend en outre un axe d'articulation supporté par la pièce centrale, les mâchoires étant mobiles en rotation autour dudit axe d'articulation.

Préférentiellement, la pince comprend en outre des moyens élastiques de rappel des mâchoires dans la position fermée, afin de permettre une fermeture automatique de la pince.

De façon avantageuse, la pince comprend en outre des moyens de verrouillage des mâchoires dans la position fermée, de façon à empêcher une éventuelle ouverture de la pince lors du dévissage de l'écrou.

L'invention se rapporte également à un procédé de démontage d'un bras d'essuie-vitre, ledit procédé étant remarquable en ce qu'il consiste à utiliser une pince conforme à l'invention en mettant en oeuvre les étapes suivantes :
- ouverture des mâchoires de la pince ;
- déplacement de la pince ouverte jusqu'à ce que les mâchoires encadrent la tête d'entraînement du bras d'essuie-vitre ;
- fermeture des mâchoires de la pince de sorte que les mors supérieurs de serrage viennent en appui contre la face annulaire supérieure de la collerette de l'écrou, et que les mors inférieurs de serrage viennent en appui contre la face inférieure de la tête d'entraînement ;
- dévissage de l'écrou provoquant le retrait à la fois de l'écrou et de la tête d'entraînement hors de l'arbre d'entraînement.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue éclatée et en perspective de dessus d'une pince conforme à l'invention ;
- la figure 2 est une vue arrière de la pince illustrée en figure 1 ;
- la figure 3 est une vue en perspective de dessus de la pince illustrée en figure 1 avec une tête d'entraînement d'un bras d'essuie-vitre, lors d'une première étape du procédé de démontage conforme à l'invention ;
- la figure 4 est une vue en perspective de dessus de la pince et de la tête d'entraînement illustrées sur la figure 3, lors d'une deuxième étape du procédé de démontage conforme à l'invention ;
- la figure 5 est une vue en perspective de dessous de la pince et de la tête d'entraînement illustrées sur les figures 3 et 4, lors de la deuxième étape du procédé de démontage conforme à l'invention ; et
- la figure 6 est une vue de dessous de la pince et de la tête d'entraînement illustrées sur les figures 3 à 5, lors d'une troisième étape du procédé de démontage conforme à l'invention.

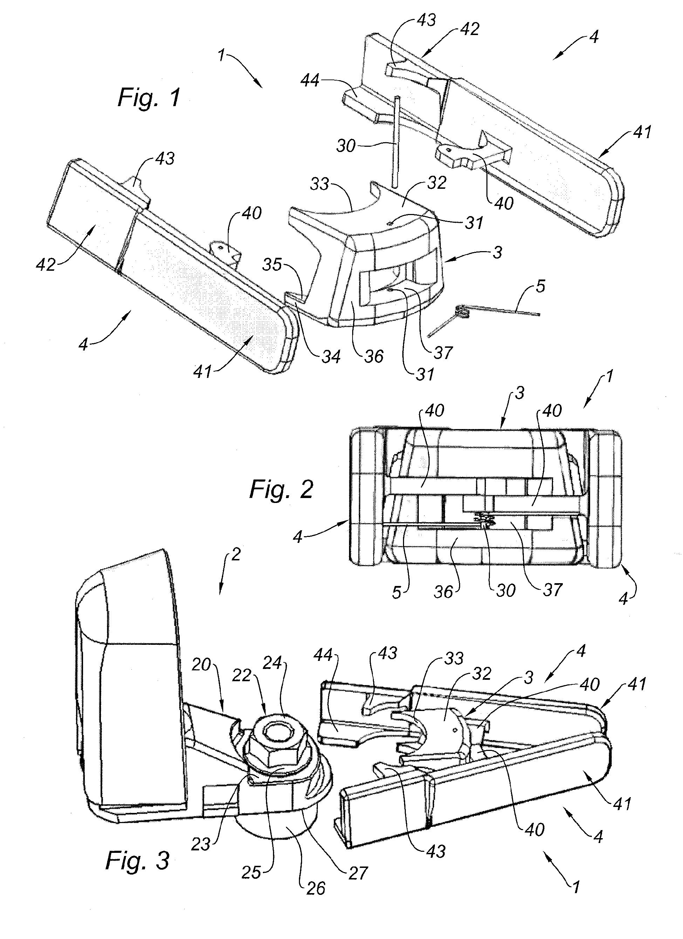

La description d'une pince 1, conforme à l'invention, de démontage d'un bras d'essuie-vitre 2 de véhicule automobile est faite en référence aux figures 1 à 6.

De manière classique, et comme illustré sur les figures 3 à 6, le bras d'essuie-vitre 2 comporte :
- une tête d'entraînement 20 pourvue d'un orifice 21 dans lequel est engagé un arbre d'entraînement (non illustré) couplé en rotation à la tête d'entraînement 20, de sorte que la rotation de l'arbre d'entraînement provoque la rotation de la tête d'entraînement 20 et du bras d'essuie-vitre 2 en général ; et
- un écrou 22 de serrage axial de la tête d'entraînement 20 sur l'arbre d'entraînement, cet écrou 22 coopérant avec une extrémité libre filetée de l'arbre d'entraînement traversant l'orifice 21 de part en part et en saillie par rapport à une face supérieure 23 de la tête d'entraînement 20.

L'écrou 22 est pourvu de :
- une tête d'écrou 24, notamment de forme hexagonale, destinée à coopérer avec un outil de vissage/dévissage, comme par exemple une clé ; et de
- une collerette 25 présentant une face annulaire inférieure venant en appui sur ladite face supérieure 23 de la tête d'entraînement 20 après serrage de l'écrou 22 sur l'arbre d'entraînement, et une face annulaire supérieure opposée à la face annulaire inférieure.

Pour coupler en rotation la tête d'entraînement 20 à l'arbre d'entraînement, la tête d'entraînement 20 est pourvue d'une couronne de couplage 26 en saillie par rapport à la face inférieure 27 de la tête d'entraînement 20, opposée à la face supérieure 23, et pourvue intérieurement de crans 28 en relief de manière à coupler en rotation l'arbre d'entraînement à l'intérieur de cette couronne de couplage 26. Pour cela, l'arbre d'entraînement est avantageusement équipé de crans en relief ménagés sur son extrémité libre filetée et destinés à coopérer, par complémentarité de forme, avec les crans 28 de la couronne de couplage 26. Les crans de l'arbre d'entraînement peuvent par exemple être ménagés sur un tronçon conique et la couronne de couplage 26 peut présenter une surface interne complémentaire de forme tronconique.

Pour réaliser le démontage du bras d'essuie-vitre 2, autrement dit pour réaliser le retrait de ce bras d'essuie-vitre 2 hors de l'arbre d'entraînement, la pince 1 comporte :
- une pièce centrale 3 supportant un axe d'articulation 30 disposé à l'intérieur d'un orifice 31 ménagé dans la pièce centrale 3 ;
- deux mâchoires 4, respectivement droite et gauche, de serrage, mobiles en rotation autour de l'axe d'articulation 31, entre une position ouverte et une position fermée ; et
- des moyens élastiques de rappel 5 des mâchoires 4 dans la position fermée.

La pièce centrale 3, sur laquelle les deux mâchoires 4 sont montées mobiles en rotation, est pourvue de :
- une paroi supérieure 32, sensiblement plane, dans laquelle est ménagée une encoche 33 en arc de cercle ;
- une paroi inférieure 34, sensiblement plane et parallèle à la paroi supérieure 32, dans laquelle est ménagée une encoche 35 en arc de cercle ; et
- une paroi centrale 36 reliant les parois supérieure 32 et inférieure 34 entre elles du côté opposé aux encoches 33 et 35 respectives, et présentant une fenêtre 37.

L'orifice 31 de réception de l'axe d'articulation 30 traverse les parois supérieure 32 et inférieure 34 de part en part.

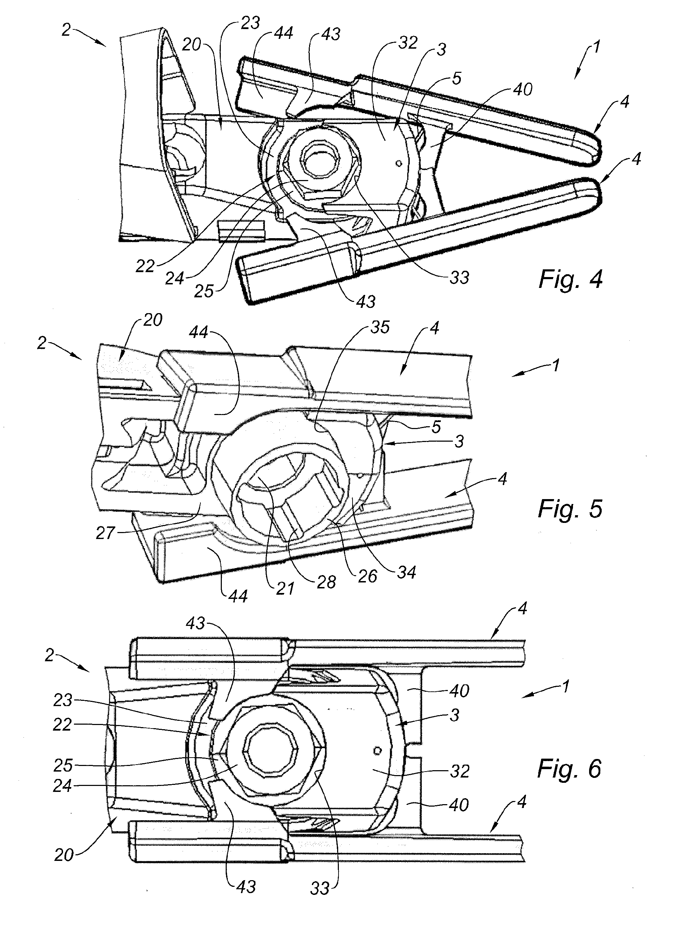

La paroi supérieure 32 est située au-dessus de la paroi inférieure 34 et est espacée de celle-ci d'une distance prédéterminée de sorte que, en cours de démontage et comme illustré sur les figures 4 à 6 :
- la paroi supérieure 32 vient en appui contre la face annulaire supérieure de la collerette 25 de l'écrou 22, l'encoche 33 contournant alors la tête d'écrou 24 afin que la paroi supérieure 32 reste écartée de la tête d'écrou 24 d'une distance suffisante pour ne pas gêner l'insertion de l'outil de vissage/dévissage sur la tête d'écrou 24 et donc ne pas gêner le dévissage de l'écrou 22 ;
- la paroi inférieure 34 vient en appui contre la face inférieure 27 de la tête d'entraînement 20, l'encoche 35 permettant le contournement de la couronne de couplage 26.

Chaque mâchoire 4 est réalisée sous la forme d'une pièce plane allongée présentant :
- un bras d'articulation 40 de la mâchoire 4 sur la pièce centrale 3 autour de l'axe d'articulation 30 ;
- une partie arrière 41 destinée à la préhension et à la manipulation par l'opérateur pour fermer ou ouvrir la pince 1, cette partie arrière 41 s'étendant à l'arrière du bras d'articulation 40 ;
- une partie avant 42 destinée à enserrer, en position fermée, la collerette 25 de l'écrou 22 et la tête d'entraînement 20, cette partie avant 42 s'étendant à l'avant du bras d'articulation 40.

Chaque bras d'articulation 40 présente une extrémité solidaire de la mâchoire 4 et une extrémité opposée libre pourvu d'un orifice dans lequel est engagé l'axe d'articulation 30. Les bras d'articulation 40 s'étendent en partie dans la fenêtre 37 ménagée dans la paroi centrale 36 de la pièce centrale 3, entre les parois supérieure 32 et inférieure 34, pour recevoir l'axe d'articulation 30 pris dans l'orifice 31 ménagé dans les parois supérieure 32 et inférieure 34 de la pièce centrale 3.

Chaque partie avant 42 de la mâchoire 4 est pourvue de :
- un mors supérieur 43 de serrage réalisé sous la forme d'une palette présentant une forme incurvée en arc de cercle ; et de
- un mors inférieur 44 de serrage réalisé sous la forme d'une palette présentant une forme incurvée en arc de cercle, sensiblement parallèle au mors supérieur 43.

Les mors supérieurs 43 sont situés au-dessus des mors inférieurs 44 correspondants et espacés de ces derniers d'une distance prédéterminée de sorte que, en cours de démontage et comme illustré sur les figures 4 à 6 :
- les mors supérieurs 43 viennent en appui contre la face annulaire supérieure de la collerette 25 de l'écrou 22, respectivement à droite et à gauche, les formes incurvées des mors supérieurs 43 permettant de contourner la tête d'écrou 24 afin que les mors supérieurs 43 restent écartés de la tête d'écrou 24 d'une distance suffisante pour ne pas gêner l'insertion de l'outil de vissage/dévissage sur la tête d'écrou 24 et donc ne pas gêner le dévissage de l'écrou 22 ; et
- les mors inférieurs 44 viennent en appui contre la face inférieure 27 de la tête d'entraînement 20, les formes incurvées des mors inférieurs 44 permettant le contournement de la couronne de couplage 26.

Comme illustré sur les figures 1 et 2, les moyens élastiques de rappel 5 sont réalisés sous la forme d'un ressort présentant une partie centrale hélicoïdale enroulée autour de l'axe d'articulation 30 et deux extrémités libres opposées et fixées sur les mâchoires 4 respectives, de sorte que ce ressort 5 exerce un effort de poussée sur les mâchoires 4 tendant à fermer ces mâchoires 4, et donc à fermer la pince 1.

De façon avantageuse, la pince 1 comprend en outre des moyens de verrouillage (non illustrés) des mâchoires 4 dans la position fermée, de façon à empêcher une éventuelle ouverture de la pince 1 lors du dévissage de l'écrou 22. Par exemple et de façon non limitative, ces moyens de verrouillage peuvent être réalisés sous la forme d'un dispositif de calage mécanique entre les deux mâchoires 4 ou d'une tige qui se coincerait sur les parties arrières 41 des mâchoires 4 dans des empreintes adéquates.

Le procédé de démontage du bras d'essuie-vitre 2 utilisant une pince 1 telle que décrite ci-dessus, met en oeuvre les étapes suivantes :
- ouverture des mâchoires 4 de la pince 1, comme illustré sur la figure 3, en exerçant un effort de rapprochement des parties arrières 41 respectives l'une de l'autre, à l'encontre de l'effort de rappel exercé par le ressort 5 ;
- déplacement de la pince 1 ouverte jusqu'à ce que les parties avant 42 des mâchoires 4 encadrent la tête d'entraînement 20 du bras d'essuie-vitre 2, comme illustré sur les figures 4 et 5, ce déplacement pouvant être effectué jusqu'à ce que la paroi supérieure 32 de la pièce centrale 3 vienne en appui contre la face annulaire supérieure de la collerette 25 de l'écrou 22 tandis que la paroi inférieure 34 de la pièce centrale 3 vient en appui contre la face inférieure 27 de la tête d'entraînement 20 ;
- fermeture des mâchoires 4 de la pince 1, favorisée par l'effort de rappel exercé par le ressort 5, de sorte que les mors supérieurs 43 viennent en appui contre la face annulaire supérieure de la collerette 25 de l'écrou 22, et que les mors inférieurs 44 viennent en appui contre la face inférieure 27 de la tête d'entraînement 20 ;
- dévissage de l'écrou 22 en engageant un outil de vissage/dévissage sur la tête d'écrou 24 accessible du fait des formes particulières des mors 43, 44 et des parois 32, 34 de la pièce centrale 3, ce dévissage provoquant le retrait à la fois de l'écrou 22 et de la tête d'entraînement 20 hors de l'arbre d'entraînement, du fait que la pince 1 enserre la collerette 25 de l'écrou 22 et la tête d'entraînement 20 entre ses mors inférieurs 44 et supérieurs 43 et également entre les parois inférieure 34 et supérieure 32 de la pièce centrale 3.

Dans le cas où la pince 1 est munie de moyens de verrouillage des mâchoires 4 dans la position fermée, ce procédé comporte une étape supplémentaire de verrouillage des mâchoires 4 dans la position fermée, entre l'étape de fermeture des mâchoires 4 et l'étape de dévissage de l'écrou 22.

Bien entendu l'exemple de mise en ouvre évoqué ci-dessus ne présente aucun caractère limitatif et d'autres détails et améliorations peuvent être apportés à la pince selon l'invention, sans pour autant sortir du cadre de l'invention où d'autres formes de mâchoires et/ou de mors et/ou de pièce centrale et/ou de moyens d'articulation des mâchoires et/ou de moyens de rappel élastique peuvent par exemple être réalisées.

## Revendications

1. Pince (1) de démontage d'un bras d'essuie-vitre (2), ledit bras d'essuie-vitre (2) comportant une tête d'entraînement (20) pourvue d'un orifice (21) dans lequel est engagé un arbre d'entraînement couplé en rotation à ladite tête d'entraînement (20), et un écrou (22) de serrage coopérant avec une extrémité libre filetée dudit arbre d'entraînement en saillie par rapport à une face supérieure (23) de la tête d'entraînement (20), ledit écrou (22) étant pourvu d'une tête d'écrou (24) et d'une collerette (25) présentant une face annulaire inférieure venant en appui sur ladite face supérieure (23) de la tête d'entraînement (20) après serrage de l'écrou (22) sur l'arbre d'entraînement, ladite pince (1) comportant deux mâchoires (4) de serrage mobiles en rotation entre une position ouverte et une position fermée, lesdites mâchoires (4) étant pourvues respectivement de :
- mors supérieurs (43) de serrage adaptés pour, en cours de démontage, venir en appui contre une face annulaire supérieure de la collerette (25) de l'écrou (22) opposée à la face annulaire inférieure ; et de
- mors inférieurs (44) de serrage situés en-dessous des mors supérieurs (43) de serrage à une distance prédéterminée et adaptés pour, en cours de démontage, venir en appui contre une face inférieure (27) de la tête d'entraînement (20) opposée à la face supérieure (23), de sorte que, en cours de démontage, la pince (1) enserre la collerette (25) de l'écrou (22) et la tête d'entraînement (20) entre ses mors inférieurs (44) et supérieurs (43) pour que le dévissage de l'écrou (22) provoque le retrait à la fois de l'écrou (22) et de la tête d'entraînement (20) hors de l'arbre d'entraînement.

2. Pince (1) selon la revendication 1, dans lequel les mors supérieurs (43) présentent une forme incurvée, notamment en arc de cercle, pour contourner la tête d'écrou (24) et ne pas gêner le dévissage de l'écrou (22) en cours de démontage.

3. Pince (1) selon l'une des revendications 1 ou 2, dans lequel les mors inférieurs (44) présentent une forme incurvée, notamment en arc de cercle, pour permettre le contournement d'une couronne de couplage (26) en saillie par rapport à la face inférieure (27) de la tête d'entraînement (20) et pourvue intérieurement de crans (28) en relief de manière à coupler en rotation l'arbre d'entraînement et la tête d'entraînement (20).

4. Pince (1) selon l'une quelconque des revendications 1 à 3, comportant en outre une pièce centrale (3) sur laquelle les deux mâchoires (4) sont montées mobiles en rotation, ladite pièce centrale (3) étant pourvue de :
- une paroi supérieure (32) conçue pour, en cours de démontage, venir en appui contre la face annulaire supérieure de la collerette (25) de l'écrou (22) ; et
- une paroi inférieure (34) conçue pour, en cours de démontage, venir en appui contre la face inférieure (27) de la tête d'entraînement (20).

5. Pince (1) selon les revendications 3 et 4, dans laquelle la paroi inférieure (34) est pourvue d'une encoche (35), notamment en arc de cercle, pour permettre le contournement de la couronne de couplage (26).

6. Pince (1) selon l'une des revendications 4 ou 5, dans laquelle la paroi supérieure (32) est pourvue d'une encoche (33), notamment en arc de cercle, pour contourner la tête d'écrou (24) et ne pas gêner le dévissage de l'écrou (22) en cours de démontage.

7. Pince (1) selon l'une quelconque des revendications 4 à 6, comprenant en outre un axe d'articulation (30) supporté par la pièce centrale (3), les mâchoires (4) étant mobiles en rotation autour dudit axe d'articulation (30).

8. Pince (1) selon l'une quelconque des revendications 1 à 7, comprenant en outre des moyens élastiques (5) de rappel des mâchoires (4) dans la position fermée.

9. Pince (1) selon l'une quelconque des revendications 1 à 8, comprenant en outre des moyens de verrouillage des mâchoires (4) dans la position fermée.

10. Procédé de démontage d'un bras d'essuie-vitre (2), ledit procédé étant **caractérisé en ce qu**'il consiste à utiliser une pince (1) conforme à l'une quelconque des revendications 1 à 9 en mettant en oeuvre les étapes suivantes :
- ouverture des mâchoires (4) de la pince (1) ;
- déplacement de la pince (1) ouverte jusqu'à ce que les mâchoires (4) encadrent la tête d'entraînement (20) du bras d'essuie-vitre (2) ;
- fermeture des mâchoires (4) de la pince (1) de sorte que les mors supérieurs (43) de serrage viennent en appui contre la face annulaire supérieure de la collerette (25) de l'écrou (22), et que les mors inférieurs (44) de serrage viennent en appui contre la face inférieure (27) de la tête d'entraînement (20) ;
- dévissage de l'écrou (22) provoquant le retrait à la fois de l'écrou (22) et de la tête d'entraînement (20) hors de l'arbre d'entraînement.
